# EUROPEAN PATENT APPLICATION

(11) **EP 2 311 890 A1**
(43) Date of publication of application: **20.04.2011**
(21) Application number: 10186942.8
(22) Date of filing: 08.10.2010
(51) Int. Cl.: C08G 18/02, C08K 5/29, C08L 59/02, C08L 59/04

(54) **New formaldehyde scavengers**

(30) Priority: 16.10.2009 WO PCT/US2009/061052
(71) Applicant: Rhein Chemie Rheinau GmbH, 68219 Mannheim (DE); Rhein Chemie Corporation, Chardon, OH 44024 (US)
(72) Inventor: Cano Sierra, Anna Maria, 69117, Heidelberg (DE); Russel, Jeffrey A., Conroe, TX 77304 (US)
(74) Representative: Siegers, Britta

(57) **Abstract**

The invention relates to new formaldehyde scavengers, a process for reducing the amount of formaldehyde by adding these scavengers and their use.

## Description

The invention relates to new formaldehyde scavengers, a process for reducing the amount of formaldehyde by adding these scavengers and their use.

Formaldehyde is a one of the most important starting materials in the chemical industry. It is used for example in the synthesis of urea formaldehyde resins, melamine resins, phenol formaldehyde resins, polyoxymethylene plastics and methylene diphenyl diisocyanates.

Formaldehyde is also a precursor to polyfunctional alcohols such as pentaerythritol, which is used to make paints and explosives. Other formaldehyde derivatives include methylene diphenyl diisocyanate, which is an important component in polyurethane paints and foams, and hexamine, which is used in phenol-formaldehyde resins.

In the textile industry use is made of formaldehyde-based resins as finishers to make fabrics crease-resistant.

Formaldehyde is also used in the production of adhesives, textile aids, bonding agents, moulding sand binders, ion exchanger, moulded and extruded articles, casting resins and hardeners.

Formaldehyde containing material can degas, which is problematic, as is has the major disadvantage that it is classified as a probable human carcinogen by the U.S. Environmental Protection Agency.

Because of the aforementioned risks for human health there was a strong need for effective scavengers for formaldehyde.

In the prior art mainly dithioxamides are known as scavengers, e.g. US 3,255,150. Those substances have the disadvantage in polymers that they decompose to sulphur, which accelerate cross-linking activities. Moreover their effectiveness depends on the presence of additional additives or stabilisers, such as phenolic compounds. Different carbodiimides have been used in the past to degrade the amount of formaldehyde, see e.g. GB 993600, EP-A 0117748, US 4923469 or WO 2007/090735, but they are either expensive or not effective enough.

There was a strong need for highly effective formaldehyde scavengers, which will also be usable in various applications.

An object of the present invention therefore was to provide an effective formaldehyde scavenger.

Surprisingly, it has now been found that certain carbodiimides achieve this objective.

The present invention therefore provides new and effective formaldehyde scavengers.

As carbodiimides the following compounds according to formula (I)

R'-(N=C=N-R)ₙ-R" (I)

are preferred,
in which
- R represents an aromatic, aliphatic, cycloaliphatic or aralkylene radical which, in the case of an aromatic or an aralkylene residue, carry in both ortho-positions to the aromatic carbon atom and optionally in para-position, which carries the carbodiimide group, aliphatic and/or cycloaliphatic substituents with at least 3 C-atoms, which can also contain heteroatoms, such as N, S and/or O, i.e. imidazolyl,
- R' represents alkyl, cycloalkyl-, aryl, aralkyl residues, which carry in both ortho-positions to the aromatic carbon atom and optionally in para-position, which carries the carbodiimide group, aliphatic and/or cycloaliphatic substituents with at least 2 C-atoms, or R-NHCONHR¹, R-NHCONR¹R² and R-NHCOOR³, -NHCOS- R¹, -COO R¹, -O R¹, -N (R¹)₂, -SR¹, -OH, -NH₂, NHR¹ or epoxy,
- R" represents -N=C=N-aryl, -N=C=N-alkyl, -N=C=N-cycloalkyl, -N=C=N-aralkyl, -NHCONHR¹, -NHCONR¹R² or -NHCOOR³, -NHCOS- R¹, -COO R¹, -O R¹, -N (R¹)₂, -SR¹, -OH, -NH₂, NH R¹, wherein the aryl or aralkyl residues carry in both ortho-positions to the aromatic carbon atom and optionally in para-position, which carries the carbodiimide group, aliphatic and/or cycloaliphatic substituents with at least 2 C-atoms, wherein R' and in R", independently of one another as well as R¹ and R² are the same or different and represent an alkyl, cycloalkyl or aralkyl radical, oligo-/polyethylene -and/or polypropylene glycol and R³ has one of the meanings of R¹ or represents a polyester, polyether or a polyamide radical, and
- n represents an integer from 1 to 5,000, preferably from 2 to 20.

Especially those formaldehyde scavengers are preferred, which contain at least one carbodiimide according formula (I), wherein R is 1,3,5-triisopropyl-2,4-diisocyanatobenzene,
R' represents alkyl, cycloalkyl, aryl or aralkyl, which carry in both ortho-positions to the aromatic carbon atom which carries the carbodiimide group, aliphatic substituents with at least 2 C-atoms, R-NHCONHR¹, R-NHCONR¹R² and R-NHCOOR³, -NHCOS- R¹,
- R" represents H, N=C=N-aryl, -N=C=N-alkyl, -N=C=N-cycloalkyl, -N=C=N-aralkyl, ,-NHCONHR¹, -NHCONR¹R² or -NHCOOR³, -NHCOS-R¹, -COO R¹, -OR¹, -N (R¹)₂, -SR¹, -OH, -NH₂, NH R¹,
wherein the aryl or aralkyl residue carries in both ortho-positions and optionally in para-position to the aromatic carbon atom, which carries the carbodiimide group, aliphatic and/or cycloaliphatic substituents with at least 2 C-atoms, wherein, in R' and in R", independently of one another as well as R¹ and R² are the same or different and represent an alkyl, cycloalkyl or aralkyl radical, oligo-/polyethylene -and/or polypropylene glycol and R³ has one of the meanings of R¹ or represents a polyester, polyether or a polyamide radical, and
n represents an integer from 1 to 5,000, preferably from 2 to 20.

Alkyl/ aliphatic preferably means C₁-C₁₈-residues.

Cycloaliphatic preferably means C₅-C₁₈-cycloalkyl and aralkyl or aralkylene preferably means C₈-C₁₈- aralkyl or aralkylene.

The polycarbodiimides used are commercially available products, for example from Rhein Chemie Rheinau GmbH under the tradenames Stabaxol® P.

Alternatively they can be prepared according to methods well known by persons skilled in the art.

The compounds can be obtained, for example, by conducting a decarboxylation condensation reaction of various polyisocyanates using an organophosphorus compound or an organometallic compound as a catalyst at a temperature not lower than about 70 °C, without using any solvent or using an inert solvent, such as e.g. toluene, xylol etc..

To prepare the carbodiimides of the general formula (I) its mono- or diisocyanates can be condensed as starting compounds at elevated temperatures, for example at 40 to 200 °C, in the presence of catalysts with the release of carbon dioxide. Suitable methods are described in DE-A-11 30 594 and in FR 1 180 370.

In another embodiment of the present invention polycarbodiimides are used. These polycarbodiimides are commercially available or can be produced by conventional production methods for polycarbodiimides [for example, the methods disclosed in US 2,941,956; JP-B-47-33279, J. Org. Chem. 28,2069-2075 (1963) and Chemical Review, 1981, Vol. 81, No.4, pages 619 to 621].

The carbodiimide compound include in particular 4,4'-dicyclohexylmethanecarbodiimide (degree of polymerization = 2 to 20), (N,N'-di-2,6-diisopropylphenylencarbodiimide (degree of polymerization = 2 to 20) and the like, and is not specifically limited as long as the compound has at least one carbodiimide group in a molecule. Those compounds are commercially available. Furthermore, polymeric aliphatic carbodiimides can be used, for example on the basis of isophorone diamine.

In one preferred embodiment of the present invention the carbodiimides are used as a mixture of at least two different carbodiimides.

In another preferred embodiment of the invention at least one sterically hindered carbodiimide is used, such as polymeric and/or oligomeric carbodiimide based on 1,3,5-triisopropyl-2,4-diisocyanate-phenolate.

In a preferred embodiment of the present invention the carbodiimide is used in an amount of from 0.001 to 100 wt.-%, preferably from 0.01 to 100 wt.-%.

In those cases, in which the amount of carbodiimide is less than 100% formaldehyde scavenger is used in form of a masterbatch, formulations or dilution, which means, that the carbodiimide is mixed with those formaldehyde containing polymers of the intended use. These intended uses can be e.g. those which are described as application examples later on.

Those polymers can be, but they are not limited to:
- aminoplastics, such as urea formaldehyde resins, melamine resins and/or phenol formaldehyde resins in melted systems or in solvents or water based systems and/or
- thermoplastics, such as polyacetals, like polyoxymethylene in melted systems or in solvents or water based systems as well as their copolymers thereof such as e.g. polyurethane-based compounds and/or
- binders/polymeric compounds/copolymeric compounds which are able to cleave/eliminate formaldehyde e.g. copolymers on acrylate basis such us copolymeric compounds containing monomeric methacrylic acid, glycidylmethacrylate or C₂-C₁₀-hydroxy-alkylmethacrylate, and/or vinyl-based compounds, such as styrene and/or olefin compounds, such as ethylene, propylene etc..

Most preferred are polyoxymethylene (POM), aminoplastics and /or acrylate copolymers.

Those polymers are commercially available.

Masterbatches, formulations or dilutions can also obtain further additives such as i.e. antioxidants, light-stabilizers, flame-retarders, heat-stabilizers, lubricants, nucleating agents, surface active agents, etc..

The present invention also provides a new process for reducing the amount of formaldehyde, in which at least 0,001 % carbodiimide is added to the formaldehyde containing polymer, and or the binders/polymeric compounds/copolymeric compounds, which are able to cleave/eliminate formaldehyde, e.g. copolymers on acrylate basis.

The polymers are those mentioned above.

The process parameters depend on the characteristics of the polymer:

In case of a solvent or a water dispersed polymer the following process is preferred:

The carbodiimide and/or mixture of carbodiimides will be added to a solution/dispersion of a polymer like a solution/dispersion of aminoplastics and/or thermoplastics, like i.e. polyacetal, aminoplast, by stirring preferably at temperatures above room temperature (elevated temperatures).

In case of a melted polymer the carbodiimide and/or mixture of carbodiimides will be added to the melted polymer, by stirring preferably at temperatures above the melting temperature of the polymer.

In all cases usual mixing equipments, like dissolver or stirrers can be used. Those mixing equipment is commercially available.

In another preferred embodiment of the present invention further additives will be added to the carbodiimide before the mixing procedure. It is also possible to partly add the additives to the polymer and the carbodiimide alternatively.

In case of a melted polymer it is also possible to add the carbodiimide
- during extrusion, to ensure it mixture during extrusion,
- by injection the polymer and/or the carbodiimide together or separately in the injection moulding procedure or
- by stirring the carbodiimide and polymer before or during the casting process.

The present invention also provides the use of carbodiimides as defined above for the following applications:
- adhesives, especially adhesives for timber or wooden materials, i.e. as wood composites and plywood, textile applications (as the textile industry uses formaldehyde-based resins as finishers to make fabrics crease-resistant), in constructions, kitchen and cabinet and furniture making, especially for aminoplastics
- plastics articles produced by extrusion, injection moulding or casting, they can also be used in adhesives or coatings especially for thermoplastics.
- in bonding agents, binders, especially moulding sand binders, local foams used as insulators, tuners or all other applications, including textile, floor mats, carpets, furniture.

The present invention is described in more detail by reference to the following examples, without being limited to them.

### Examples:

The following compounds have been used.

POM (Polyoxyethylene) = Edgetek^{™} ATC-000/000 Natural UV from PolyOne Corporation, a polyacetal (POM) homopolymer compound, which was dried 3 h at 90°C before being added to the extruder.

Stabaxol®P = Isocyanate free - substituted aromatic polymeric carbodiimide according to formula I from Rhein Chemie Rheinau GmbH.

In the examples 1-4 different amounts of Stabaxol® P have been used as described in table 1. Stabaxol® P was incorporated to a double screw extruder ZSK 25 from Coperion W & P filled with POM at a temperature range from 180 to 220°C. The extruded granulates have been analyzed by photometric detection with pararosaniline after a water steam distillation.

**Table 1: Compositions of the examples and test results**

| Example No. | Amount of Stabaxol®P in POM [%] | Amount of formaldehyde [mg/kg] |
|---|---|---|
| 1 | 0,00 | 1670 |
| 2 | 0,01 | 7,9 |
| 3 | 0,02 | 3,7 |
| 4 | 0,1 | <0,1 |

It can clearly be seen, that the amount of formaldehyde can be dramatically reduced by the addition of even small amount of carbodiimides, which clearly demonstrate our invention.

## Claims

1. Formaldehyde scavenger, **characterized in that** it contains at least one carbodiimide according to formula (I)
R'-(N=C=N-R)ₙ-R" (I),
in which
- R represents an aromatic, aliphatic, cycloaliphatic or aralkylene radical which, in the case of an aromatic or an aralkylene residue, carry in both ortho-positions and optionally in para-position to the aromatic carbon atom, which carries the carbodiimide group, aliphatic and/or cycloaliphatic substituents with at least 3 C-atoms, which can also contain heteroatoms,
- R' represents alkyl, cycloalkyl, aryl, aralkyl residues, which carry in both ortho-positions and optionally in para-position to the aromatic carbon atom which carries the carbodiimide group, aliphatic and/or cycloaliphatic substituents with at least 2 C-atoms, or R-NHCONHR¹, R-NHCONR¹R^{2,} R-NHCOOR³, -NHCOS- R¹, -COO R¹, -O R¹, -N (R¹)₂, -SR¹, -OH, -NH₂, NHR¹ or epoxy,
- R" represents -N=C=N-aryl, -N=C=N-alkyl, -N=C=N-cycloalkyl, -N=C=N-aralkyl, ,-NHCONHR¹, -NHCONR¹R² or -NHCOOR³, -NHCOS-R¹, -COO R¹, -OR¹, -N (R¹)₂, -SR¹, -OH, -NH₂, NH R¹,
wherein the aryl, aralkyl residue carries in both ortho-positions and optionally in para-position to the aromatic carbon atom, which carries the carbodiimide group, aliphatic and/or cycloaliphatic substituents with at least 2 C-atoms, wherein, in R' and in R", independently of one another as well as R¹ and R² are the same or different and represent an alkyl, cycloalkyl or aralkyl radical, oligo-/polyethylene -and/or polypropylene glycol and R³ has one of the meanings of R¹ or represents a polyester, polyether or a polyamide radical, and
- n represents an integer from 1 to 5,000.

2. Formaldehyde scavenger, according to claim 1, **characterized in that** it contains at least one carbodiimide according formula (I), wherein R = 1,3,5-triisopropyl-2,4-diisocyanatobenzene,
- R' represents alkyl, cycloalkyl, aryl or aralkyl, which carries in both ortho-positions to the aromatic carbon atom which carries the carbodiimide group aliphatic substituents with at least 2 C-atoms, or R-NHCONHR¹, R-NHCONR¹R² and R-NHCOOR³,-NHCOS- R¹,
- R" represents H, N=C=N-aryl, -N=C=N-alkyl, -N=C=N-cycloalkyl, -N=C=N-aralkyl, ,-NHCONHR¹, -NHCONR¹R² or -NHCOOR³, -NHCOS-R¹, -COO R¹, -OR¹, -N (R¹)₂, -SR¹, -OH, -NH₂, NH R¹,
wherein the aryl, aralkyl residue carries in both ortho-positions and optionally in para-position to the aromatic carbon atom, which carries the carbodiimide group, aliphatic and/or cycloaliphatic substituents with at least 2 C-atoms, wherein, in R' and in R", independently of one another as well as R¹ and R² are the same or different and represent an alkyl, cycloalkyl or aralkyl radical, oligo-/polyethylene -and/or polypropylene glycol and R³ has one of the meanings of R¹ or represents a polyester, polyether or a polyamide radical, and
- n represents an integer from 1 to 5,000.

3. Formaldehyde scavenger, according to claim 1 to 2, **characterized in that** it also contains aminoplastics, thermoplastics, and/or binders/polymeric compounds/ copolymeric compounds which are able to cleave/eliminate formaldehyde.

4. Formaldehyde scavenger, according to claim 1 to 3, **characterized in that** it contains the carbodiimide in an amount of from 0.001 to 100 wt.- %.

5. Process for reducing the amount of formaldehyde, in which at least 0,001% formaldehyde scavenger according to claim 1 to 4 is added to the formaldehyde containing polymer and/or binders/polymeric compounds/copolymeric compounds which are able to cleave/eliminate formaldehyde.

6. Use of the formaldehyde scavenger according to one of the claims 1 to 5 for the following applications:
- Adhesives, adhesive for timber or wooden materials, textile applications to make fabrics crease-resistant, in constructions, kitchen and cabinet and furniture making,
- for plastics articles produced by extrusion, injection moulding or casting and/or
- in bonding agents, binders, moulding sand binders, local foams used as insulators, tuners or all other applications including textile, floor mats, carpets, furniture.
